# EUROPEAN PATENT APPLICATION

(11) **EP 2 322 480 A1**
(43) Date of publication of application: **18.05.2011**
(21) Application number: 09811413.5
(22) Date of filing: 24.08.2009
(51) Int. Cl.: C01G 37/00, C25D 21/14

(54) **PROCESS FOR PRODUCTION OF CHROMIUM HYDROXIDE**

(30) Priority: 05.09.2008 JP 2008228262
(71) Applicant: Nippon Chemical Industrial Co., Ltd., Koto-ku, Tokyo 136-8515 (JP)
(72) Inventor: KUWANO Hiroyuki, Shunan-shi Yamaguchi 745-0024 (JP); BANDA Tomohiro, Shunan-shi Yamaguchi 745-0024 (JP); TANAKA Yasuyuki, Tokyo 136-8515 (JP)
(74) Representative: Becker Kurig Straus
(86) International application number: PCT/JP2009/064726
(87) International publication number: WO 2010/026886

(57) **Abstract**

In a method for manufacturing chromium hydroxide according to the present invention, chromium hydroxide having higher solubility in an acidic aqueous solution than chromium hydroxide obtained by conventional manufacturing methods can be obtained. The method is **characterized by** simultaneously adding an aqueous solution of an inorganic alkali and an aqueous solution containing trivalent chromium to an aqueous medium under the condition of a reaction liquid temperature of 0°C or more and less than 50°C to produce chromium hydroxide. The pH of the reaction liquid while the aqueous solution containing trivalent chromium and the aqueous solution of the inorganic alkali are added is preferably maintained in the range of 7.0 to 12.

## Description

### Technical Field

The present invention relates to a method for manufacturing chromium hydroxide. The chromium hydroxide manufactured according to the method of the present invention is useful for, for example, chromium plating or metal surface treatment or trivalent chromium chemical conversion treatment.

### Background Art

Chromium plating is used for decoration and for industrial use in many industrial fields. Chromium plating is widely used as decoration plating because it does not corrode in the air and does not lose luster. Also, chromium plating is widely used for mechanical parts and the like that require wear resistance because it has high hardness and a low friction coefficient. A large amount of hexavalent chromium is used in a plating liquid used for this plating. Since the effect of hexavalent chromium on the human body is feared, hexavalent chromium must be reduced to trivalent chromium under very strict conditions so that the hexavalent chromium is not released in the environment in the treatment of the plating waste liquid. Therefore, the development of a plating liquid using trivalent chromium, which is chromium having low toxicity, instead of hexavalent chromium, is desired.

For the plating liquid using trivalent chromium, for example, Patent Document 1 describes a chromium plating liquid using a trivalent chromium compound, such as chromium chloride, chromium sulfate, and chromium sulfamate, as a plating liquid for decoration plating. However, when an inorganic salt of trivalent chromium, such as chromium chloride or chromium sulfate, is used as a source of chromium, chromium is consumed by plating, while chloride ions or sulfate ions, which are the counteranions of the chromium salt, remain in the plating liquid. From the necessity to keep the liquid composition of the plating liquid constant, the plating liquid is used by appropriately adding the source of chromium in an amount corresponding to the consumed chromium, and therefore, chloride ions or sulfate ions are accumulated in the plating liquid. Therefore, finally, the liquid composition cannot be kept constant, and thus, the total amount of the plating liquid is replaced by a new plating liquid, and the spent plating liquid is treated as a waste liquid.

As a method for solving this problem, Patent Document 2 proposes a trivalent chromium plating method in which when trivalent chromium plating is performed using a plating liquid containing chromium chloride and ammonium chloride, part of the plating liquid is circulated in a cooling apparatus, and part of the ammonium chloride is crystallized and removed in this cooling apparatus to perform plating while controlling the concentration of the ammonium chloride in the plating liquid.

Also, solving this problem by using, as a source of trivalent chromium, chromium hydroxide, which is a compound without counteranion accumulation, in the state of a water-containing gel is proposed (see Patent Document 3). However, chromium hydroxide is generally insoluble in water and has low solubility in an acidic aqueous solution used as an ordinary plating liquid. Therefore, long-time stirring under heating is required for the preparation of a plating liquid. Also, when the consumed chromium is supplemented, a long time is required to dissolve supplied chromium hydroxide. For these reasons, the plating work is interrupted during that time, and problems occur in the preparation of the plating liquid and the plating work.

The following methods (1) to (3) are known as conventional methods for manufacturing chromium hydroxide (see Patent Documents 4 to 6).

### Method (1):

A method in which a reducing agent is previously added to an aqueous liquid containing chromate ions discharged in a chromium plating step and the like to reduce the chromate ions in the liquid to trivalent chromium ions, to which sodium hydroxide is added to obtain a precipitate of chromium hydroxide (Patent Document 4). However, impurity ions, such as sulfate ions, are often attached to chromium hydroxide obtained in this manner, and the chromium hydroxide should be purified to be applied to various uses. Patent Document 4 describes washing with water under the condition of a pH of 9.5 or more.

### Method (2):

Urea is added to an aqueous solution of sulfate containing trivalent chromium. This solution is heated to a temperature in the range of about 90°C to the boiling point of the aqueous solution to increase the pH of the liquid by the decomposition of the urea, and the concentration of the sulfate ions in the aqueous solution is held at about 1 mole/liter or less during this time to deposit and/or separate basic chromium sulfate. Next, the produced basic chromium sulfate is heated together with urea to the above temperature range or neutralized with a hydroxide or carbonate of an alkali metal, an alkaline earth metal, or ammonium to manufacture chromium hydroxide (Patent Document 5). Patent Document 5 states that when chromium hydroxide is manufactured by neutralization, a method starting from an aqueous solution of chromium chloride is easy. But, there is no description of the solubility of the obtained chromium hydroxide and addition order in neutralization.

### Method (3):

An aqueous solution of a trivalent chromium salt is neutralized with sodium hydroxide or ammonia water. A precipitate is separated from the obtained slurry liquid of chromium hydroxide by filtration. The separated precipitate is suspended in water to provide a slurry liquid. This slurry liquid is passed through an ion exchange resin for separation from the water-soluble impurities by adsorption (Patent Document 6). Patent Document 6 describes a method in which an aqueous solution of produced chromium sulfate or chromium chloride is neutralized with sodium hydroxide or ammonia water, and a precipitate is separated from the obtained slurry liquid of chromium hydroxide by filtration and then washed to remove impurity ions. But, a method for adding sodium hydroxide to an aqueous solution of chromium sulfate is used in the actual manufacturing. Also, there is no description of the solubility of the obtained chromium hydroxide.

Apart from the above manufacturing methods, Patent Document 7 discloses various inorganic acid chromium (III) salts, but does not describe chromium hydroxide.

Patent Document 1: Japanese Patent Laid-Open No. 9-95793 (p. 2)
Patent Document 2: Japanese Patent Laid-Open No. 2002-322599 (CLAIMS)
Patent Document 3: Japanese Patent Laid-Open No. 2006-249518
Patent Document 4: Japanese Patent Laid-Open No. 52-35794 (CLAIMS, p. 1 and p. 2)
Patent Document 5: Japanese Patent Laid-Open No. 53-132499 (CLAIMS, p. 1 and p. 2)
Patent Document 6: Japanese Patent Laid-Open No. 2-92828 (CLAIMS, p. 1 and p. 2)
Patent Document 7: WO 2005/056478

### Disclosure of the Invention

### Problems to be Solved by the Invention

It is an object of the present invention to provide a method for manufacturing chromium hydroxide having high solubility.

### Means for Solving the Problems

The present invention provides a method for manufacturing chromium hydroxide characterized by simultaneously adding an aqueous solution of an inorganic alkali and an aqueous solution containing trivalent chromium to an aqueous medium under the condition of a reaction liquid temperature of 0°C or more and less than 50°C to produce chromium hydroxide.

Also, the present invention provides a method for manufacturing an aqueous solution of an inorganic acid chromium (III) salt or an aqueous solution of an organic acid chromium (III) salt characterized by producing chromium hydroxide by the method mentioned earlier, and then dissolving the chromium hydroxide in an aqueous solution of an inorganic acid or an aqueous solution of an organic acid.

### Advantages of the Invention

According to the present invention, chromium hydroxide having higher solubility in an acidic aqueous solution than chromium hydroxide obtained by conventional manufacturing methods can be obtained. By using the chromium hydroxide manufactured by the method of the present invention as a source of trivalent chromium, the time of the preparation of a trivalent chromium plating liquid can be reduced, and adverse effect on a plating coating due to undissolved chromium hydroxide can be prevented. Also, when a liquid containing trivalent chromium, using the chromium hydroxide manufactured by the method of the present invention, is used for chromium plating or metal surface treatment or trivalent chromium chemical conversion treatment, the counteranions of the source of trivalent chromium are not accumulated in the plating liquid and the like, and therefore, it is easy to keep the composition of the plating liquid and the like constant. Also, the time of the preparation of the plating liquid and the like is significantly reduced, and therefore, the effect on related industries is large.

### Best Mode for Carrying Out the Invention

One characteristic of the manufacturing method of the present invention is simultaneous addition of an aqueous solution of an inorganic alkali and an aqueous solution containing trivalent chromium. The present inventors have known that by simultaneously adding these aqueous solutions to an aqueous medium, unexpectedly, chromium hydroxide having high solubility in an acidic aqueous solution can be obtained. On the other hand, in conventional methods for manufacturing chromium hydroxide, Example, the manufacturing methods described in Patent Documents 4 and 6, simultaneous addition is not used, and instead, an alkali, such as sodium hydroxide, is added to the aqueous solution containing trivalent chromium to produce chromium hydroxide. Chromium hydroxide obtained by this method has poor solubility in an acidic aqueous solution. In the following description, chromium means trivalent chromium unless otherwise specified.

The aqueous solution of the inorganic alkali and the aqueous solution containing trivalent chromium are substantially continuously added to the aqueous medium. Substantially continuously is intended to allow a case where the addition is unavoidably temporarily discontinuous due to a fluctuation in manufacturing conditions, and the like.

In the simultaneous addition of the aqueous solution of the inorganic alkali and the aqueous solution containing trivalent chromium, both aqueous solutions are substantially simultaneously added at the start of operation, though the addition of the aqueous solution of the inorganic alkali may precede the addition of the aqueous solution containing trivalent chromium, or on the contrary, the addition of the aqueous solution containing trivalent chromium may precede the addition of the aqueous solution of the inorganic alkali, to the extent of not impairing the effect of the present invention. At the completion of operation, similarly, the addition of both aqueous solutions are substantially simultaneously completed, but the completion of the addition of the aqueous solution of the inorganic alkali may precede the completion of the addition of the aqueous solution containing trivalent chromium, or on the contrary, the completion of the addition of the aqueous solution containing trivalent chromium may precede the completion of the addition of the aqueous solution of the inorganic alkali, to the extent of not impairing the effect of the present invention.

The aqueous solution of the inorganic alkali and the aqueous solution containing trivalent chromium are simultaneously added to the aqueous medium. The aqueous medium used in the present invention preferably has a pH in the neutral range to the alkaline range. It is also possible to use an aqueous medium having a pH in the acidic range, but considering that the produced chromium hydroxide has good solubility, it is advantageous to use an aqueous medium having a pH in the neutral range to the alkaline range.

For example, water (pure water) and an aqueous solution of a neutral salt can be used as the aqueous medium having a pH in the neutral range. For example, sodium chloride and the like can be used as the neutral salt. Generally, the concentration of the neutral salt is preferably up to about 1 mol/l. For example, ammonia water can be used as the aqueous medium having a pH in the alkaline range. Generally, the concentration of the ammonia water is preferably up to about 0.01 mol/l. Also, the aqueous medium can contain a water-soluble organic solvent, such as lower alcohol, as required, whether its pH is in the neutral range or the alkaline range. Among these aqueous media, water (pure water) is preferably used from the viewpoint that the mixing of unnecessary chemical species can be prevented in the preparation of a chromium plating liquid and the like.

The solubility of the produced chromium hydroxide is also affected by the temperature of the reaction liquid, in addition to simultaneously adding the aqueous solution of the inorganic alkali and the aqueous solution containing trivalent chromium. The reaction liquid herein is a liquid obtained by adding the aqueous solution of the inorganic alkali and the aqueous solution containing trivalent chromium to the aqueous medium. The temperature of the reaction liquid should be 0°C or more and less than 50°C. If the temperature of the reaction liquid is 50°C or more, the produced chromium hydroxide becomes an aggregate or massive easily, and therefore, chromium hydroxide having high solubility is not obtained. If the temperature of the reaction liquid is less than 0°C, the trivalent chromium salt and/or the inorganic alkali may be deposited. When the temperature of the reaction liquid is 10°C or more and less than 50°C, particularly 10 to 40°C, chromium hydroxide having high solubility is more easily obtained, and therefore, such temperature is preferred.

The reaction of the aqueous solution of the inorganic alkali and the aqueous solution containing trivalent chromium is neutralization reaction, and therefore, chromium hydroxide having the desired properties is obtained by mixing both aqueous solutions in the aqueous medium. During the reaction with the simultaneous addition, preferably, the reaction liquid is stirred to allow reaction to occur uniformly and promote reaction. If the stirring is insufficient, the amount of the trivalent chromium may be locally excessive with respect to the amount of the alkali in the reaction liquid. Chromium hydroxide produced in such a state has poor solubility in an acidic aqueous solution. Therefore, it is important to perform the addition of the aqueous solution containing trivalent chromium so that the amount of the trivalent chromium is not locally excessive with respect to the amount of the alkali. From this viewpoint, it is preferred to adjust the stirring conditions so that the local occurrence of stagnant portions is avoided and uniform mixing can be performed. The state in which the amount of the trivalent chromium is locally excessive with respect to the amount of the alkali refers to, for example, a state in which the aqueous solution of the inorganic alkali is added to the aqueous solution containing trivalent chromium, as described in Patent Documents 4 and 6.

The concentration, addition speed, addition ratio, and the like of the aqueous solution of the inorganic alkali and the aqueous solution containing trivalent chromium are not particularly limited, but in terms of obtaining chromium hydroxide having high solubility, it is preferred to adjust these according to the ability of the stirrer and the manufacturing scale so that nonuniform mixing does not occur during the reaction. For preferred concentration, the concentration of hydroxide ions in the aqueous solution of the inorganic alkali is 1 to 50% by weight, particularly 5 to 30% by weight, and the concentration of trivalent chromium in the aqueous solution containing trivalent chromium is 1 to 40% by weight, particularly 3 to 20% by weight. When 1 liter, for example, of the aqueous medium is used, preferred addition speed is 2 to 150 ml/min, particularly 10 to 100 ml/min, for the aqueous solution of the inorganic alkali, and 5 to 300 ml/min, particularly 10 to 200 ml/min for the aqueous solution containing trivalent chromium, on the condition that the concentration is in the above-described range. For the addition ratio, that is, the ratio of addition speed, the addition speed of the aqueous solution containing trivalent chromium is 0.1 to 20 times, particularly 0.5 to 10 times, the addition speed of the aqueous solution of the inorganic alkali, on the condition that the concentration and the addition speed are in the above-described range.

It is preferred to adjust the concentration, addition ratio, and addition speed of the aqueous solution of the inorganic alkali and the aqueous solution containing trivalent chromium so that the pH of the reaction liquid while these aqueous solutions are added is maintained at 7.0 to 12, particularly 7.5 to 10. By maintaining the pH during the reaction in this range, chromium hydroxide having the target solubility can be successfully manufactured.

A water-soluble trivalent chromium salt can be used, without particular limitation, as the source of chromium in the aqueous solution containing trivalent chromium. Such a salt includes, for example, chromium chloride, chromium sulfate, chromium ammonium sulfate, chromium potassium sulfate, chromium formate, chromium fluoride, chromium perchlorate, chromium sulfamate, chromium nitrate, and chromium acetate. One of these salts can be used, or two or more of these salts can be used in combination. These salts may be used in the state of an aqueous solution or in the state of a powder. For example, "35% Liquid Chromium Chloride" and "40% Liquid Chromium Sulfate" (product names) manufactured by Nippon Chemical Industrial Co., Ltd., and commercially available chromium chloride (crystalline product) can be used. Among these salts, chromium chloride and chromium sulfate are preferably used in terms of no residual organic substance, easy drainage treatment, and economy.

As the aqueous solution containing trivalent chromium, one obtained by reducing hexavalent chromium in an aqueous solution containing hexavalent chromium to trivalent chromium can also be used. For example, an aqueous solution obtained by passing a sulfurous acid gas through an aqueous solution of dichromate to reduce hexavalent chromium to trivalent chromium can be used. Alternatively, an aqueous solution obtained by adding sulfuric acid to an aqueous solution of dichromic acid to reduce hexavalent chromium to trivalent chromium with an organic substance can also be used.

Alkali metal hydroxide, such as sodium hydroxide and potassium hydroxide, ammonia, and the like can be used as the inorganic alkali used in the aqueous solution of the inorganic alkali simultaneously added with the aqueous solution containing trivalent chromium. If an organic alkali is used instead of the inorganic alkali, the chromium may remain in the filtration waste liquid after the production of chromium hydroxide because the organic alkali forms a water-soluble complex salt with the chromium. Therefore, the use of the organic alkali should be avoided. When particularly alkali metal hydroxide is used among the above-described inorganic alkalis, the good solubility of chromium hydroxide in an acidic aqueous solution is maintained for a long period, and therefore, the use of alkali metal hydroxide is preferred.

When chromium hydroxide is produced by simultaneously adding the aqueous solution containing trivalent chromium and the aqueous solution of the inorganic alkali, the slurry is filtered to separate the chromium hydroxide as a solid, and the chromium hydroxide is washed. A usual method can be used for the filtration. For example, suction filtration using a Buchner funnel can be performed. The washing after the filtration is performed using water. For example, the washing can be performed by adding water to the cake on the Buchner funnel for repulping, and further performing suction filtration, and the like. The washing is preferably performed until the conductivity of the filtrate is, for example, 5 mS/cm or less. A high conductivity of the filtrate means that a large amount of by-product salts derived from the raw materials remain in the chromium hydroxide after the washing. Such by-product salts should be removed as much as possible because when the chromium hydroxide is used as a source of chromium in a trivalent chromium plating liquid, the by-product salts are accumulated in the plating liquid. Therefore, the washing is preferably performed until the conductivity of the filtrate is the above value or less. Also, the filtration and the washing are preferably performed at a low temperature of preferably 0 to 50°C, more preferably 20 to 40 °C, because the olation and oxo synthesis of chromium, and the resulting production of a poorly soluble substance can be prevented.

After the washing, the chromium hydroxide is dried to be in a powder state, or water is added to the chromium hydroxide to provide a slurry having a predetermined concentration.

It is preferred to add a reducing agent during the above reaction, or after the completion of the reaction. Thus, even if the reaction liquid or the chromium hydroxide is placed in an oxidation atmosphere during the reaction or during storage (during storage in a slurry state), reoxidation can be prevented, and therefore, the production of hexavalent chromium can be prevented. Particularly, it is preferred to add a reducing agent after the completion of the reaction, from the viewpoint that reoxidation can be surely prevented. Organic or inorganic reducing agents conventionally used in the art can be used, without particular limitation, as the reducing agent. For example, monohydric alcohol, such as methyl alcohol and propyl alcohol, and dihydric alcohol, such as ethylene glycol and propylene glycol, are suitably used as the organic reducing agent. Other organic reducing agents include monosaccharides, such as glucose, disaccharides, such as maltose, polysaccharides, such as starch, and the like. The inorganic reducing agents include, for example, hydrazine, hydrogen peroxide, and the like.

The chromium hydroxide manufactured according to the method of the present invention (hereinafter also simply referred to as "the chromium hydroxide of the present invention") is characterized by being insoluble or poorly soluble in pure water, but having high solubility in an acidic aqueous solution (for example, an acidic aqueous solution having a pH of 3 or less). Chromium hydroxide having such characteristics is specified by its degree of aggregation and particle diameter. Specifically, the chromium hydroxide of the present invention is in the form of fine particles and has a low degree of aggregation. In the present invention, the degree of aggregation is defined by MV/D. MV represents a volume average particle diameter measured by a particle size distribution measurement apparatus, and D represents an average particle diameter measured from a scanning electron microscope (SEM) image. According to this definition, a larger value of the degree of aggregation means higher aggregation properties (that is, the particles aggregate).

A specific method for measuring the degree of aggregation is as follows. Produced chromium hydroxide is sufficiently dispersed in water by a household mixer or the like, and then, the volume average particle diameter (MV) is measured by a laser diffraction scattering type particle size distribution measurement apparatus. Also, the particle diameter of 200 primary particles of the chromium hydroxide is measured with an SEM image, and the average value is the average particle diameter D with the SEM image. When the primary particle is not spherical, the maximum length across the particle is the particle diameter. A value obtained by dividing MV measured in this manner by D is the degree of aggregation.

In the chromium hydroxide of the present invention, the degree of aggregation calculated based on the above definition is preferably 10 or more and less than 70. If the degree of aggregation of the chromium hydroxide is more than 70, the solubility in an acidic aqueous solution tends to decrease. In the chromium hydroxide manufactured according to the method of the present invention, as the degree of aggregation becomes lower, the solubility in an acidic aqueous solution becomes higher. From this viewpoint, a smaller value of the degree of aggregation of the chromium hydroxide is preferred. Since there is a limit to the lower limit value of the degree of aggregation attainable by the manufacturing method of the present invention, the lower limit value of the degree of aggregation of the chromium hydroxide is defined as 10 in the present invention. Particularly, when the degree of aggregation is 10 to 60, change over time is reduced, and better solubility can be kept, and therefore, such degree of aggregation is more preferred.

The chromium hydroxide of the present invention is in the form of fine particles such that the average particle diameter D of the primary particles is preferably 40 to 200 nm, and more preferably 50 to 100 nm. Chromium hydroxide having such a particle diameter satisfies the above-described degree of aggregation, and therefore, the solubility in an acidic aqueous solution is improved. If the average particle diameter D of the primary particles is less than 40 nm, the electrostatic attraction is strong, aggregation occurs easily, and the solubility decreases. If the average particle diameter D of the primary particles is more than 200 nm, the specific surface area decreases, and portions reacted with the acid decreases, and therefore, the solubility decreases.

The particle shape of the chromium hydroxide of the present invention is not particularly limited and can be a shape, for example, a spherical shape and a massive shape.

The chromium hydroxide of the present invention is generally in the state of a dry powder or in the state of a slurry of the chromium hydroxide suspended in water.
In terms of increasing the solubility in an acidic aqueous solution, the chromium hydroxide is preferably continuously in the state of a slurry from immediately after it is manufactured according to the method of the present invention. Components other than the chromium hydroxide may be contained or may not be contained in the slurry. When components other than the chromium hydroxide are contained in the slurry, the components include Na, K, Cl, SO₄, NH₄, and the like. When the slurry is used as a supplementary liquid for a plating liquid and the like used for chromium plating or metal surface treatment or trivalent chromium chemical conversion treatment, the slurry preferably contains substantially no impurity ions to prevent the accumulation of unnecessary ions due to supplement. The "impurity ions" in this specification mean ions other than H⁺ and OH⁻ ions. "Contains substantially no" means that impurity ions are not intentionally added during the preparation of the chromium hydroxide and the preparation of the slurry using the chromium hydroxide, and is intended to allow a slight amount of impurity ions unavoidably mixed. Therefore, in addition to pure water and ion exchange water, tap water, industrial water, and the like containing substantially no impurity ions may be used as water used for the preparation of the chromium hydroxide and the preparation of the slurry using the chromium hydroxide.

As already described, the chromium hydroxide of the present invention has high solubility in an acidic aqueous solution (for example, an acidic aqueous solution having a pH of 3 or less). Moreover, its solubility is maintained even after long-term storage. On the other hand, conventionally obtained chromium hydroxide changes over time during long-term storage, and easily transitions to hydroxide poorly soluble in an aqueous solution of an acid or an alkali. The cause is not exactly clear, but is considered to be that the chromium hydroxide transitions to a poorly soluble form due to the olation and oxo synthesis of chromium. Therefore, when a chromium plating liquid is prepared, stirring must be performed for a long time until chromium hydroxide is completely dissolved.

High solubility in this specification means that when chromium hydroxide corresponding to a Cr content of 1 g is added to 1 liter of an aqueous solution of hydrochloric acid having a pH of 0.2 at a temperature of 25°C, the chromium hydroxide is completely dissolved within 30 minutes. The dissolution of the chromium hydroxide is visually determined. The time of the dissolution of the chromium hydroxide is time until the liquid becomes transparent.

An aqueous solution of an inorganic acid or an organic acid is used as the above acidic aqueous solution. The aqueous solution of the inorganic acid includes an aqueous solution of an inorganic acid, for example, nitric acid, phosphoric acid, hydrochloric acid, sulfuric acid, and hydrofluoric acid. The aqueous solution of the organic acid includes an aqueous solution of an organic acid, such as formic acid, acetic acid, glycolic acid, lactic acid, gluconic acid, oxalic acid, maleic acid, malonic acid, malic acid, tartaric acid, succinic acid, citric acid, fumaric acid, and butyric acid.

The chromium hydroxide manufactured according to the method of the present invention can be added to and dissolved in an aqueous solution of an inorganic acid or an aqueous solution of an organic acid, in a powder state, or by adding water to the chromium hydroxide to be in a slurry state, thereby, an aqueous solution of an inorganic acid chromium (III) salt or an organic acid chromium (III) salt is obtained. The concentration and used amount of the chromium hydroxide and the aqueous solution of the inorganic acid or the aqueous solution of the organic acid can be appropriately determined according to the type (composition formula) of the target inorganic acid chromium salt or organic acid chromium salt, and the target concentration of the target inorganic acid chromium salt or organic acid chromium salt in the final aqueous solution.

In terms of dissolving the chromium hydroxide easily and surely, the aqueous solution of the inorganic acid or the aqueous solution of the organic acid preferably has low pH, specifically, preferably a pH of 2 or less, and more preferably a pH of 1.5 or less. The concentration of the inorganic acid or the organic acid in the aqueous solution of the inorganic acid or the aqueous solution of the organic acid is preferably in the range of 1 to 50% by weight, particularly 5 to 50% by weight. Also, in terms of dissolving the chromium hydroxide easily and surely, it is preferred to use the chromium hydroxide corresponding to 1 g or less of Cr, with respect to 1 liter of the aqueous solution of the inorganic acid or the aqueous solution of the organic acid.

The dissolution of the chromium hydroxide in the aqueous solution of the inorganic acid or the aqueous solution of the organic acid is preferably performed at 25 to 90°C.

The inorganic acid chromium salt obtained in this manner includes chromium hydrochloride, chromium nitrate, chromium phosphate, chromium sulfate, chromium fluoride, and the like. These inorganic acid chromium salts may be basic salts. For example, chromium nitrate is a compound represented by the composition formula Cr(OH)x(NO₃)y, wherein 0≤x≤2, 1≤y≤3, and x+y=3, and the compound also includes basic chromium nitrate, such as cr(OH)_{0.5}(NO₃)_{2.5}, Cr(OH) (NO₃)₂, and Cr (OH)₂ (NO₃), in addition to chromium nitrate, which is a normal salt represented by Cr(NO₃)₃.

The organic acid chromium salt is a compound represented by the general formula Crₘ(A^{x})ₙ. In the above general formula, A represents a residue obtained by removing a proton from an organic acid. A has a negative charge. x represents the charge of A (negative charge). m and n each represents an integer satisfying 3m+xn=0.

The organic acid in the organic acid chromium salt is represented by R(COOH)_{y}, wherein R represents an organic group, a hydrogen atom, or a single bond or a double bond; and y represents the number of carboxyl groups in the organic acid and is an integer of 1 or more, preferably 1 to 3. A in the above general formula is represented by R(COO⁻)_{y}. When R is an organic group, the organic group is preferably an aliphatic group having 1 to 10 carbon atoms, particularly 1 to 5 carbon atoms. This aliphatic group may be substituted with other functional groups, for example, a hydroxyl group. Both of a saturated aliphatic group and an unsaturated aliphatic group can be used as the aliphatic group.

Also, the chromium hydroxide manufactured according to the method of the present invention can be added to and dissolved in an aqueous solution of two or more acids, in a powder state, or by adding water to the chromium hydroxide to be in a slurry state, to provide an aqueous solution containing a source of chromium (III). The concentration and used amount of the chromium hydroxide and the aqueous solution of the acids, the combination of the acids used, and the compounding ratio of the acids can be appropriately determined according to the type of the target source of chromium (III), and the target concentration of the target source of chromium (III) in the final aqueous solution.

The type of the aqueous solution of the acids in which the chromium hydroxide is dissolved includes a combination of organic acids, a combination of inorganic acids, or a combination of an organic acid and an inorganic acid. The organic acid and the inorganic acid that can be used include those similar to those described previously.

The method for manufacturing an aqueous solution of two or more acids containing a source of chromium (III) according to the present invention should follow the method for manufacturing an aqueous solution of an inorganic acid chromium salt or an organic acid chromium salt described above, and therefore, detailed description of the manufacturing method is omitted here. The outline is described. For example, the following methods 1) to 3) can be used for the dissolution of chromium hydroxide in an aqueous solution of acids, but the dissolution is not limited to these methods.
1) A method in which an aqueous solution of acids in which the desired two or more acids are previously dissolved is prepared, and chromium hydroxide is added to the aqueous solution to dissolve the chromium hydroxide in the acid solution;
2) A method in which an acid of one component among the desired acids is previously appropriately selected, next, the selected acid is dissolved in water to prepare an aqueous solution of the acid, next, chromium hydroxide is added to the obtained aqueous solution of the acid to perform primary dissolution treatment, and an acid (acids) of the remaining component(s) is added to the obtained aqueous solution to perform secondary dissolution treatment; or
3) A method in which an aqueous solution of acids in which part of the required amount of the desired two or more acids is previously dissolved in water is prepared, next, chromium hydroxide is added to the obtained aqueous solution of the acids to perform primary dissolution treatment, and the remaining amount of the acids are added to the obtained aqueous solution to perform secondary dissolution treatment to dissolve the chromium hydroxide.

The source of chromium (III) of the present invention obtained in this manner is a complex chromium (III) salt having two or more acid radicals bonded to chromium, represented by the following formula. The type of acids bonded to chromium may be selected from a combination of organic acids, a combination of inorganic acids, or both of an organic acid and an inorganic acid.

[formula 1] Cr*ₖ*(OH)*ₗ*(A₁^{x₁})*_{m₁}*(A₂^{x₂})*_{m₂}*...(An^{xₙ})_{mₙ}

wherein A₁, A₂, ..., Aₙ represent two or more acid residues obtained by removing a proton from an acid selected from the group consisting of an inorganic acid and an organic acid. When phosphoric acid is used as the acid, the above acid residue is represented by H₂PO⁻ and/or HPO₄²⁻. x₁, x₂, ..., xₙ represent a charge. However, A₁, A₂, ..., Aₙ are not the same acid radical. k, 1, m₁, m₂, ..., mₙ represent a real number satisfying 3k-1+x₁m₁+x₂m₂+... +Xₙmₙ=0.)

In the above formula, the ratio of the above H₂PO₄⁻ and HPO₄²⁻ when phosphoric acid is used as the acid is arbitrarily changed by the reaction conditions, the raw material system, and the like.

The chromium hydroxide manufactured according to the method of the present invention has high solubility in an acidic aqueous solution as described above and is therefore useful as, for example, a source of trivalent chromium in chromium plating or a metal surface treatment liquid or a trivalent chromium chemical conversion treatment liquid using trivalent chromium, as described below. By using the chromium hydroxide of the present invention as a source of trivalent chromium, the time of the preparation of the plating liquid and the treatment liquid can be reduced. Also, undissolved chromium hydroxide is not present in the plating liquid and the treatment liquid, and therefore, a good-quality plating coating and trivalent chromium chemical conversion coating can be formed. The "trivalent chromium chemical conversion treatment" in this specification refers to treatment in which a material to be treated is brought into contact with an aqueous solution containing a trivalent chromium salt as the main component to chemically produce a coating containing trivalent chromium on the material to be treated.

The present invention also provides a liquid containing trivalent chromium, using the above-described chromium hydroxide having high solubility as a source of chromium. The liquid containing trivalent chromium according to the present invention is used for final finish for decoration and for industrial trivalent chromium plating. Also, the liquid containing trivalent chromium is used for the surface treatment of various metals, such as plating provided as a layer on nickel plating. Further, the liquid containing trivalent chromium is used for the trivalent chromium chemical conversion treatment of zinc plating, tin plating, and the like. In other words, the liquid containing trivalent chromium according to the present invention can be a trivalent chromium plating liquid and a trivalent chromium chemical conversion treatment liquid. In the following description, these liquids are collectively called "a plating liquid and the like" unless otherwise specified.

When the liquid containing trivalent chromium according to the present invention is used as a trivalent chromium plating liquid, the trivalent chromium plating liquid contains trivalent chromium derived from the above-described chromium hydroxide, and other components, including an organic acid and the like. When the liquid containing trivalent chromium according to the present invention is used as a treatment liquid for trivalent chromium chemical conversion treatment, the treatment liquid uses the above-described chromium hydroxide as a source of chromium and can further contain a cobalt compound, a silicon compound, a zinc compound, various organic acids, and the like.

The cobalt compound used for the above trivalent chromium chemical conversion treatment liquid includes cobalt chloride, cobalt nitrate, cobalt sulfate, cobalt phosphate, cobalt acetate, and the like. One of these can be used, or two or more of these can also be mixed and used. The silicon compound includes colloidal silica, sodium silicate, potassium silicate, and lithium silicate. One of these silicon compounds can be used, or two or more of these silicon compounds can also be mixed and used. The zinc compound includes zinc chloride, zinc sulfate, zinc nitrate, zinc oxide, zinc carbonate, zinc phosphate, zinc acetate, and the like. One of these zinc compounds can be used, or two or more of these zinc compounds can also be mixed and used. The organic acid includes oxalic acid, malonic acid, succinic acid, citric acid, adipic acid, tartaric acid, malic acid, glycine, and the like. It is considered that since these exhibit chelating action, the trivalent chromium can be held in the plating liquid in a stable form.

The above trivalent chromium chemical conversion treatment liquid preferably contains 0.005 to 1.0 mole/liter, for example, of chromium. The molar ratio of the organic acid to the chromium is preferably 1 to 5 moles with respect to 1 mole of the chromium.

The present invention also provides, in addition to the above-described plating liquid and the like, a supplementary liquid for a plating liquid and the like used for chromium plating or metal surface treatment or trivalent chromium chemical conversion treatment. This supplementary liquid comprises a slurry containing the above-described chromium hydroxide. This slurry preferably contains no impurity ions as described above. In metal surface treatment, trivalent chromium chemical conversion treatment, and the like, inorganic anions, for example, sulfate ions, nitrate ions, and chloride ions, are not taken in the coating and remain in the liquid. Therefore, when the source of chromium is additionally poured into the plating liquid and the like, inorganic anions that are the counteranions of the source of chromium are gradually accumulated in the plating liquid and the like, and the composition of the plating liquid and the like is changed. On the other hand, the supplementary liquid comprising the slurry containing the above-described chromium hydroxide does not contain these anions, and therefore, even if the supplementary liquid is additionally poured into the plating liquid and the like as a source of chromium, the change in the composition of the plating liquid and the like is small. As a result, the plating liquid and the like can be used for a long period without frequently renewing the plating liquid and the like.

The type of the plating liquid and the like to which the source of chromium is supplied by the above supplementary liquid is not particularly limited, and a plating liquid and the like containing trivalent chromium conventionally used can be used.

A suitable amount of the supplementary liquid of the present invention is added to the plating liquid and the like according to the extent of the consumption of chromium ions in the plating liquid and the like, while plating and trivalent chromium chemical conversion treatment are performed. The addition may be continuous or intermittent.

The present invention has been described based on the preferred embodiment of the present invention. However, the present invention is not limited to the above embodiment, and various modifications can be made within the common sense of those skilled in the art. Such modifications fall within the scope of the present invention.

### Examples

The present invention will be specifically described below by way of Examples. "%" means "% by weight" unless otherwise specified.

### [Example 1]

140 g of a 10% aqueous solution of sodium hydroxide, and a 7% aqueous solution of chromium chloride obtained by adding 220 g of water to 55 g of a 35% aqueous solution of chromium chloride (manufactured by Nippon Chemical Industrial Co., Ltd.) for dilution were each placed in a container and prepared. Next, the aqueous solution of sodium hydroxide was adjusted to 20°C, and the aqueous solution of chromium chloride was adjusted to 20°C. The aqueous solution of sodium hydroxide and the aqueous solution of chromium chloride were simultaneously added into pure water adjusted to 20°C. The addition speed was 2 ml/min for the aqueous solution of sodium hydroxide and 4.5 ml/min for the aqueous solution of chromium chloride. The addition was continuously performed. The addition was performed for 60 minutes. During the addition, the pH of the reaction liquid was maintained at 7.5 to 8.5. During the addition, the temperature of the reaction liquid was maintained at 20 to 25°C. During the addition, the reaction liquid was stirred (700 rpm) so that the amount of trivalent chromium was not locally excessive with respect to the amount of sodium hydroxide. A precipitate produced by the reaction was filtered and washed with water at 30°C, until the conductivity of the filtrate was 1 mS/cm, to obtain chromium hydroxide. This chromium hydroxide was suspended in pure water to obtain a slurry having a concentration of 8%. The MV and D and degree of aggregation MV/D of the obtained chromium hydroxide were as shown in Table 1. The solubility when the chromium hydroxide corresponding to a Cr content of 1 g was added to 1 liter of an aqueous solution of hydrochloric acid having a pH of 0.2 at a temperature of 25°C (immediately after the production of the chromium hydroxide, and after the slurry of the chromium hydroxide was stored for 30 days) was as shown in the following Table 1.

### [Example 2]

59 g of a 10% aqueous solution of ammonia was used instead of the 10% aqueous solution of sodium hydroxide used in Example 1. The temperature of the aqueous solution of ammonia was adjusted to 20°C. Except these, chromium hydroxide was obtained as in Example 1. Measurement as in Example 1 was performed for the obtained chromium hydroxide. The results are shown in the following Table 1.

**[Table 1]**

| | | Example 1 | Example 2 |
|---|---|---|---|
| MV (µm) | | 1.1 | 1.6 |
| D (nm) | | 37 | 330 |
| Degree of aggregation | | 30 | 5 |
| Solubility (min) | Immediately after production | 1 | 1 |
| | After 30 days | 14 | 25 |

### [Comparative Examples 1 and 2]

70 g of a 20% aqueous solution of sodium hydroxide, and a 7% aqueous solution of chromium chloride obtained by adding 208 g of water to 52 g of a 35% aqueous solution of chromium chloride (manufactured by Nippon Chemical Industrial Co., Ltd.) for dilution were each placed in a container and prepared. Next, the aqueous solution of sodium hydroxide and the aqueous solution of chromium chloride were adjusted to reaction temperature shown in Table 2. Unlike Examples 1 and 2, the aqueous solution of sodium hydroxide was added to the aqueous solution of chromium chloride at speed shown in Table 2, while the aqueous solution of chromium chloride was stirred. The produced precipitate was filtered and washed with water to obtain about 12 g of chromium hydroxide. Except these, operations as in Example 1 were performed to obtain a slurry of the chromium hydroxide. Measurement as in Example 1 was performed for the obtained chromium hydroxide. The results are shown in the following Table 2. However, the solubility was measured only immediately after the production.

### [Comparative Example 3]

Operations as in Example 1 were performed, except that the temperature of the reaction liquid was 70°C in Example 1, to obtain a slurry of chromium hydroxide. Measurement as in Example 1 was performed for the obtained chromium hydroxide. The results are shown in the following Table 2. However, the solubility was measured only immediately after the production.

**[Table 2]**

| | Comparative Example 1 | Comparative Example 2 | Comparative Example 3 |
|---|---|---|---|
| Addition speed (ml/min) | 10 | 30 | - |
| Reaction temperature (°C) | 20 | 90 | 70 |
| MV (µm) | 7.5 | 4.5 | 2.7 |
| D (nm) | 59 | 53 | 37 |
| Degree of aggregation | 127 | 85 | 73 |
| Solubility (immediately after production, min) | >120 | >120 | >120 |

From the above results of Examples and Comparative Examples, it is found that the chromium hydroxide obtained by the methods in Examples has high solubility. Particularly, as is clear from comparison between Example 1 and Example 2, it is found that when alkali metal hydroxide is used as the inorganic alkali used in the preparation of chromium hydroxide, the good solubility of the chromium hydroxide is maintained even after long-term storage.

On the other hand, it is found that in the chromium hydroxide in Comparative Examples prepared by adding the aqueous solution of the inorganic alkali to the aqueous solution containing trivalent chromium, the aggregation of the primary particles is much, and the solubility is low. It is found that even if the chromium hydroxide is prepared by simultaneously adding the aqueous solution of the inorganic alkali and the aqueous solution containing trivalent chromium, the primary particles aggregate easily, and the solubility is low, in the case of high reaction temperature (Comparative Example 3).

### [Example 3]

Chromium hydroxide was obtained as in Example 1. This chromium hydroxide was suspended in pure water to obtain a slurry having a concentration of 8%. Then, each obtained slurry of the chromium hydroxide was added and dissolved, in an amount corresponding to a Cr content of 1 g, in 1 liter of various aqueous solutions of inorganic acids at a temperature of 25°C, or in 1 liter of various aqueous solutions of organic acids at a temperature of 50°C to obtain aqueous solutions of inorganic acid chromium salts or aqueous solutions of organic acid chromium salts. The time required for the dissolution (unit: min) is shown in Table 3.

**[Table 3]**

| Type of acid | pH of aqueous solution of acid | Dissolution time (min) |
|---|---|---|
| Nitric acid | 0.2 | 1 |
| Phosphoric acid | 0.9 | 40 |
| Sulfuric acid | 0.2 | 1 |
| Oxalic acid | 0.6 | 34 |
| Formic acid | 0.5 | 42 |
| Malonic acid | 0.5 | 78 |
| Glycolic acid | 1.1 | 90 |

### [Examples 4 to 6]

Chromium hydroxide was obtained as in Example 1. This chromium hydroxide was suspended in pure water to obtain a slurry having a concentration of 8%. Then, an amount corresponding to a Cr content of 1 g was added and dissolved in 1 liter of aqueous solutions containing two acids at a temperature of 25°C to obtain aqueous solutions containing a source of chromium (III). The time required for the dissolution (unit: min) is shown in Table 4. The composition of the aqueous solution of the acids used in each Example is as follows.
liquid A (pH: 0.2): 2.6% by weight of hydrochloric acid, 5.2% by weight of nitric acid
liquid B (pH: 0.4): 3.3% by weight of phosphoric acid, 2.5% by weight of sulfuric acid
liquid C (pH: 0.3): 2.6% by weight of hydrochloric acid, 2.2% by weight of oxalic acid

**[Table 4]**

| | Type of aqueous solution of acids | Dissolution time (min) |
|---|---|---|
| Example 4 | A | 15 |
| Example 5 | B | 16 |
| Example 6 | C | 21 |

### [Use Example 1]

A plating liquid for trivalent chromium plating having the following composition was prepared in a square plating vessel having an internal volume of 8 liters. Chromium plating was performed under the conditions of a bath temperature of 50°C and a current density of 40 A/dm², using a mild steel round bar as the material to be plated, and a carbon plate as the anode. The amount of chromium consumed and the concentration of chromium in the bath were calculated from the weight measurement of the round bar before and after the plating. When the concentration of chromium in the plating liquid decreased by 1 to 2 g/liter, the slurry of chromium hydroxide obtained in Example 1 was added to the plating liquid in an amount corresponding to the electrodeposited metal chromium, and chromium plating was continuously performed while the plating liquid was sufficiently stirred. As a result, good chromium plating was obtained.

### (Composition of Plating Liquid)

| | |
|---|---|
| Chromium chloride hexahydrate | 300 g/L |
| Boric acid | 30 g/L |
| Glycine | 50 g/L |
| Ammonium chloride | 130 g/L |
| Aluminum chloride hexahydrate | 50 g/L |

## Claims

1. A method for manufacturing chromium hydroxide, **characterized by** simultaneously adding an aqueous solution of an inorganic alkali and an aqueous solution comprising trivalent chromium to an aqueous medium under the condition of a reaction liquid temperature of 0°C or more and less than 50°C to produce chromium hydroxide.

2. The manufacturing method according to claim 1, wherein the addition of the aqueous solution comprising trivalent chromium is performed so that the amount of the trivalent chromium is not locally excessive with respect to the amount of the alkali.

3. The manufacturing method according to claim 1 or 2, wherein the pH of a reaction liquid while the aqueous solution comprising trivalent chromium and the aqueous solution of the inorganic alkali are added is maintained in the range of 7.0 to 12.

4. The manufacturing method according to any of claims 1 to 3, wherein water, an aqueous solution of a neutral salt, or ammonia water is used as the aqueous medium.

5. The manufacturing method according to any of claims 1 to 4, wherein after production of the chromium hydroxide, filtration is performed, and the chromium hydroxide is washed with water until the conductivity of a filtrate is 5 mS/cm or less.

6. A method for manufacturing an aqueous solution of an inorganic acid chromium (III) salt or an aqueous solution of an organic acid chromium (III) salt, **characterized by** producing chromium hydroxide by a method according to claim 1, and then dissolving the chromium hydroxide in an aqueous solution of an inorganic acid or an aqueous solution of an organic acid.

7. A method for manufacturing an aqueous solution comprising a source of chromium (III), **characterized by** producing chromium hydroxide by a method according to claim 1, and then dissolving the chromium hydroxide in an aqueous solution of two or more acids.

8. An aqueous solution comprising a source of chromium (III) obtained by a manufacturing method according to claim 6 or 7, used for metal surface treatment or trivalent chromium chemical conversion treatment.
